# NEUE EUROPÄISCHE PATENTSCHRIFT

(11) **EP 0 770 698 B2**
(45) Veröffentlichungstag und Bekanntmachung des Hinweises auf die Entscheidung über den Einspruch: **28.11.2018**
(45) Hinweis auf die Patenterteilung: 23.05.2001
(21) Anmeldenummer: 96114118.1
(22) Anmeldetag: 04.09.1996
(51) Int. Cl.: C23C 4/08, C23C 4/18

(54) **Verfahren zum Herstellen einer Gleitfläche auf einem metallischen Werkstück**
Process for manufacture of a sliding surface on a metallic workpiece
Procédé de fabrication d'un surface de glisse sur une pièce métallique

(30) Priorität: 31.10.1995 DE 19540572
(43) Veröffentlichungstag der Anmeldung: 02.05.1997
(73) Patentinhaber: Volkswagen Aktiengesellschaft, 38440 Wolfsburg (DE)
(72) Erfinder: Kloft, Manfred, Dipl.-Ing., 38154 Rhode (DE); Strich, Reinhard, Dipl.-Ing., 38118 Braunschweig (DE)

(56) Entgegenhaltungen:
- DE-A- 2 433 814
- US-A- 5 080 056
- DATABASE WPI Section Ch, Week 8428 Derwent Publications Ltd., London, GB; Class M13, AN 84-173116 XP002025342 & JP 59 093 865 A (TOYOTA MOTOR KK) , 30.Mai 1984
- DATABASE WPI Section Ch, Week 9342 Derwent Publications Ltd., London, GB; Class M13, AN 93-334588 XP002025343 & SU 1 767 010 A (KARPENKO PHYS MECH INST) , 7.Oktober 1992
- DATABASE WPI Section Ch, Week 7821 Derwent Publications Ltd., London, GB; Class M13, AN 78-37705A XP002025344 & JP 53 041 621 A (HONDA MOTOR IND KK) , 15.April 1978

## Beschreibung

Die Erfindung betrifft ein Verfahren gemäß dem Oberbegriff des Patentanspruches 1. Die Erfindung betrifft weiter eine Hubkolbenmaschine, insbesondere eine Verbrennungskraftmaschine, gemäß dem Oberbegriff des Anspruchs 7.

Aus der gattungsgemäßen DE-44 40 713 A1 ist ein Verfahren zum Herstellen von Gleitflächen auf Gußeisenteilen bekannt, welches in mehreren Verfahrensschritten Schmiertaschen in der Gleitfläche offenlegt, welche im Betrieb eine hydrodynamische Schmierung gewährleisten sollen. Die Verfahrensschritte umfassen dabei ein mechanisches Bearbeiten der betreffenden Flächen, anschließend ein Bearbeiten mit einer chemisch und elektrochemisch inaktiven Flüssigkeit unter einem zur Flitterentfernung geeigneten Druck. Durch die Kombination der Verfahrensschritte Flüssigkeitsstrahlen und Reibplattieren werden in der betreffenden Oberfläche die Schmiertaschen freigelegt, welche in ihrer Gesamtheit ein die erforderliche hydrodynamische Schmierung gewährleistendes Microdruckkammersystem bilden. Die Materialausbrüche werden dadurch erzielt, daß durch eine Honbearbeitung Titan-Karbide und Titan-Nitride aus der Oberfläche herausgerissen werden, wobei die so entstehenden Krater durch die weitere Bearbeitung wieder zugeschmiert werden. Das anschließende Flüssigkeitsstrahlen und Reibplattieren legt diese Vertiefungen wieder frei.

Grundsätzlich ist es aus der US-A-5080056 bekannt, auf aus einer Aluminiumlegierung bestehende Werkstücke durch Hochgeschwindigkeits-Flammspritzen eine Aluminium-Bronze-Legierung aufzubringen, deren Schichtdicke anschließend durch Honen auf ein Endmaß bearbeitet wird. Das in der US-A-5080056 vorgeschlagene Hochgeschwindigkeitsflammspritzen kann bei einer Vielzahl von Werkstücken, beispielsweise bei Zylinderlaufbahnen von Brennkraftmaschinen infolge der vergleichsweise hohen eingebrachten Energie nicht angewendet werden, da es zu Verzügen in den Zylinderlaufbahnen kommen kann.

Die DE 24 33 814 A1 beschreibt ein Legierungspulver bzw. Pulvergemisch für verschleißfeste Spritzschichten. Hierbei werden an sich bekannte Molybdänschicht derart verbessert, daß die so erhaltenen Oberflächen erhöhten Belastungen gewachsen sind.

Aus der JP 59 093 865 A ist ein Material für Reibungsflächen bekannt, wobei auf der Oberfläche eines Trägermaterials mit Hilfe des Plasmaspritzverfahrens eine Beschichtung mit vorbestimmten Anteilen von Eisen-Chrom-Legierungspulver, Molybdänpulver sowie Weichlegierungspulver aufgebracht wird.

Die SU 1 767 010 A betrifft ein auf Eisen basierendes Pulver für Schutzbeschichtungen auf Stahl. Dieses Pulver enthält zusätzlich vorbestimmte Anteile von Molybdän, Chrom, Aluminium, Vanadium, Bor sowie Seltene Erden. Diese Beschichtung soll hervorragende Rostschutzeigenschaften entwickeln.

Die JP 53 041 621 A betrifft Zylinder für Brennkraftmaschinen, wobei auf der Innenseite von Zylindern aus Aluminiumlegierung eine Beschichtung aus reduziertem Eisenpulver aufgebracht wird, deren Oberflächenstruktur feiner als 250 mesh ist und die einen bestimmten Anteil an Kohlenstoff enthält, der zwischen 0,4 und 1,5 % liegt.

Im Dokument WO 95/02023A1 wird ein Beschichtungssystem mit in weichem Metall eingeschlossenen Festkörperschmierstoff und verschleißfesten Partikel zur Ausbildung einer Verschleißschicht für Zylinderlaufbahnen offenbart. Das Aufbringen erfolgt durch Plasmaspritzen. Das weiche Metall bildet eine den Festkörperschmierstoff und die verschleißfesten Partikel zusammenhaltende Matrix aus. Die Verschleißschicht wird gehont und dabei teilweise abgetragen. Die Beschichtung enthält Poren, die als Ölreservoir dienen.

Es ist ferner bekannt, im Gegensatz zu einem Microdruckkammersystem ein kommunizierendes System, beispielsweise auf Zylinderlaufbahnen von Brennkraftmaschinen ,durch eine Honbearbeitung zu erzielen. Hierbei entstehen sich kreuzende Riefen, welche durch die Kreuzungsbereiche miteinander verbunden sind und insgesamt ein offenes System darstellen. Nachteilig hierbei ist es, daß das auf der Gleitfläche gleitende Werkstück, beispielsweise ein Kolbenring eines Kolbens einer Brennkraftmaschine, das in den Riefen befindliche Öl vor sich her schiebt, wodurch kein hydrodynamischer Öldruck aufgebaut werden kann. Infolgedessen kommt es an den Riefenkanten zu einer Mischreibung zwischen den beteiligten Gleitpartnern. Dieses bei Grauguß-Werkstücken weitverbreitete Schmierungssystem ist bei Werkstücken, die aus Gewichtsgründen aus einer Aluminiumlegierung bestehen sollen, nicht anwendbar.

Der Erfindung liegt die Aufgabe zugrunde, ein Verfahren der o.g. Art sowie eine Hubkolbenmaschine der o.g. Art zu schaffen, wobei in kosten- und fertigungsgünstiger Art und Weise mit wenigen Verfahrensschritten ein Microdruckkammersystem auf der Gleitfläche erzeugt wird.

Die Lösung dieser Aufgabe gelingt mit den Merkmalen des Patentanspruches 1 bzw. 7. Vorteilhafte Ausgestaltung des Verfahrens sind in den abhängigen Ansprüchen angegeben.

Das erfindungsgemäße Verfahren stellt in vergleichsweise einfacher Weise ein Microdruckkammersystem bereit, indem auf ein Werkstück aus einer Aluminiumlegierung durch thermisches Spritzen eine Verschleißschicht aufgebracht wird, welche anschließend unter Freilegung der Schmiertaschen des Microdruckkammersystems durch mechanisches Bearbeiten teilweise abgetragen wird.

Hierdurch wird eine Gleitfläche auf dem metallischen Werkstück geschaffen, welche eine ausreichende Verschleißfestigkeit aufweist, die der Grundwerkstoff nicht bietet, wobei durch das thermische Spritzen und die anschließende mechanische Bearbeitung eine Vielzahl von Materialausbrüchen entsteht, welche während der mechanischen Bearbeitung nur zu einem geringen Teil zugeschmiert werden und in Folge dessen eine ausreichende Anzahl von das Microdruckkammersystem bildenden Vertiefungen bereitstellt. Das erfindungsgemäße Verfahren vermeidet vorteilhafterweise jeglichen umweltbelastenden, galvanischen Verfahrensschritt.

Das Microdruckkammersystem auf der Gleitfläche entsteht somit in gänzlich anderer Art und Weise als in dem gattungsbildenden Stand der Technik, welcher notwendigerweise auf das Vorhandensein von Titananteilen angewiesen ist.

In vorteilhafter Ausgestaltung der Erfindung wird die Verschleißschicht mittels Plasmaspritzen aufgebracht. Diese Plasmaspritzschichten sind von sich aus bereits mikroporös, so daß bei ihnen durch einen einmaligen Bearbeitungsvorgang, beispielsweise Honen, das Microdruckkammersystem erzeugt werden kann.

Bei Verwendung von geeigneten Spritzpulvern für das Plasmaspritzen sowie geeigneter Parameter für das Honen lassen sich extrem glatte Gleitflächen mit äußerst geringen Rauhtiefewerten schaffen, welche zur hydrodynamischen Schmierung das vorgenannte Microdruckkammersystem aufweisen.

Weitere Vorteile der Erfindung ergeben sich aus dem nachfolgend anhand einer Zeichnung näher erläuterten Ausführungsbeispiel.

Es zeigen:
- Figur 1:: den schematischen Aufbau einer Plasmaspritzschicht auf einem Werkstück,
- Figur 2:: schematisch ein kommunizierendes System ohne hydrodynamische Schmierung auf einer Werkstückoberfläche nach dem Stand der Technik und
- Figur 3:: eine schematische Ansicht ähnlich Figur 2 eines Microdruckkammersystems der Erfindung.

Als metallisches Werkstück 1, auf welchem eine eine hydrodynamische Schmierung gewährleistende Gleitfläche 2 hergestellt werden soll, wird eine Zylinderlaufbahn eines Zylinderkurbelgehäuses einer Brennkraftmaschine angenommen. Dieses Kurbelgehäuse wird aus einem Aluminiumwerkstoff im Druckgußverfahren hergestellt, wobei als Gußwerkstoff AlSi6Cu4 verwendet wird.

Um auf den Zylinderlaufbahnen eine den Betriebsbedingungen entsprechende Schicht aufzubringen, wird auf das Werkstück 1 mittels Plasmaspritzen eine Verschleißschicht 3 aufgebracht.

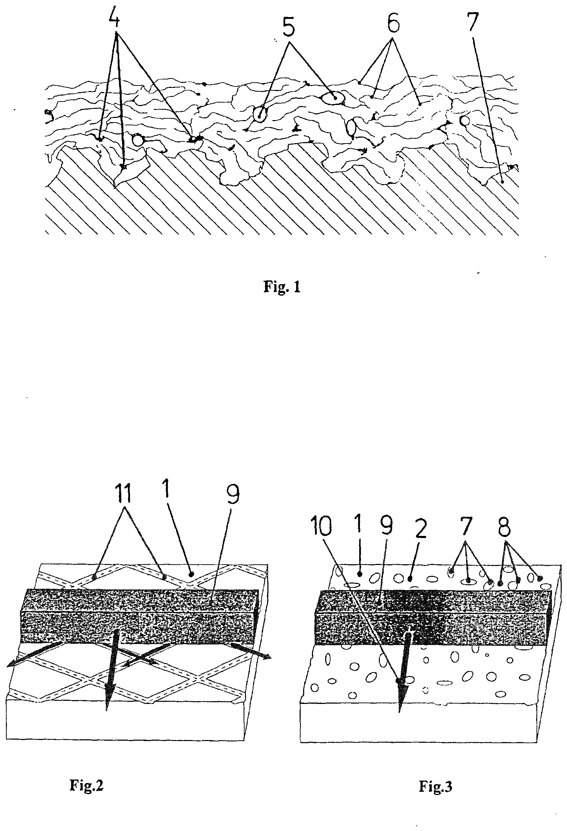

Figur 1 zeigt in starker Vergrößerung und schematisiert einen Querschnitt durch ein Werkstück 1 mit aufgebrachter Verschleißschicht 3. Erkennbar ist die Verschleißschicht 3 durch mechanische Verklammerung am Werkstück 1 gehalten, da die Spritzpartikel der Verschleißschicht im flüssigen Zustand in die Unebenheiten und Hinterschneidungen der Werkstückoberfläche eindringen. An diesen Stellen entstehen beim Erstarren der Verschleißschicht formschlüssige Verbindungen.
Zusätzlich bauen sich innerhalb der Verschleißschicht 3 Schrumpfspannungen auf, welche zu kraftflüssigen Verbindungen zwischen Werkstück 1 und Verschleißschicht 3 führen.

In der Verschleißschicht 3 sind sowohl Verunreinigungen 4 wie auch unaufgeschmolzene Spritzpartikel 5 enthalten, während bei 6 vergleichsweise dünne Oxidschichten dargestellt sind.

Die für die Verschleißschicht 3 verwendeten Spritzpulver bestehen aus einem bestimmten Volumenprozentanteil aus einem Molybdänpulver, der Rest wird aus einem Stahlpulver gebildet. Dieses kann beispielsweise aus Eisen, Molybdän, Chrom, Nickel, Silicium und Bor gebildet sein, welches ein insgesamt sehr hartes Stahlpulver ergibt. Alternativ hierzu kann ein legierter Werkzeugstahl, bestehend aus Eisen, Molybdän, Wolfram und Chrom verwendet werden. Ebenso ist die Verwendung eines niedrig legierten Stahles, beispielsweise auf der Basis von Eisen, Chrom, Mangan und Kohlenstoff möglich.

Die Verschleißschicht kann aus einem Spritzpulver mit 20 - 60 % Molybdänpulveranteil und einem dementsprechenden Stahlpulveranteil bestehen, besonders gute Ergebnisse wurden mit einem 30 - 50 % Molybdänpulveranteil und einem dementsprechenden 70 % Stahlpulveranteil aus einem legierten Werkzeugstahl erzielt. Ein mögliches Optimum, welches u. a. vom Honverfahren und der zu erzielenden Rauhtiefe abhängt, wurde bei jeweils 50 % Pulveranteilen ermittelt.

Nach dem Erstarren der Verschleißschicht 3 kann durch eine mechanische Bearbeitung in Form von Honen, wie es beispielsweise aus der genannten DE 44 40 713 A1 bekannt ist, diese Verschleißschicht 3 auf ein gewünschtes Endmaß abgetragen werden.
Vorteilhafterweise reißen bei diesem Honvorgang die vergleichsweise harten, unaufgeschmolzenen Spritzpartikel aus der Oberfläche aus, wodurch vereinzelte Schmiertaschen 7 in Form von Vertiefungen freigelegt werden.

Vorteilhafterweise bildet die Gesamtheit dieser einzelnen Schmiertaschen 7 ein Microdruckkammersystem auf der Gleitfläche 2, welches zwischen diesen Schmiertaschen 7 Plateaus 8 mit äußerst geringer Rauhtiefe aufweist.
Weitere Verfahrensschritte, etwa Fluidstrahlen zum Freilegen von durch die mechanische Bearbeitung zugeschmierten Schmiertaschen ist nicht erforderlich.

Figur 3 zeigt einen Ausschnitt aus einer Zylinderlaufbahn eines Werkstückes 1, mit der Gleitfläche 2 und dem durch die Schmiertaschen 7 mit den dazwischen liegenden Plateaus 8 gebildeten Microdruckkammersystem. Schematisch ist ein Kolbenringsegment 9 mit seiner Bewegungsrichtung 10 dargestellt, welches im Betrieb der Brennkraftmaschine relativ zu der Gleitfläche 2 bewegt wird.
Das in den Schmiertaschen 7 angesammelte Schmieröl gewährleistet durch das Aufschwimmen des Kolbenringsegmentes 9 eine hydrodynamische Schmierung.

Im Gegensatz dazu zeigt Figur 2 ein offenes, kommunizierendes System nach dem Stand der Technik. Erkennbar sind die durch die Honbearbeitung entstehenden, kreuzenden Riefen 11, in welchen das Schmieröl durch die Bewegung des Kolbenringsegmentes 9 in Richtung der eingezeichneten Pfeile vor diesen Kolbenringen hergeschoben wird. Hierdurch kann kein hydrodynamischer Druck aufgebaut werden und an den Riefenkanten ist eine Mischreibung zwischen Kolbenringen und Zylinderlaufbahnen möglich.

Bei geeigneter Abstimmung der Verfahrensparameter, insbesondere der Zusammensetzung der Verschleißschicht 3 sowie des Honabtrages, ist es durch das erfindungsgemäße Verfahren möglich, mit vergleichsweise wenigen und einfachen Verfahrensschritten ein Microdruckkammersystem zur Gewährleistung einer hydrodynamischen Schmierung zu erzeugen. Insbesondere die Zusammensetzung der aufgespritzten Verschleißschicht hat direkte Auswirkungen auf die entstehende Härte der Gleitfläche; der Honabtrag kann beispielsweise mit steigendem Molybdänpulveranteil gesteigert werden.
Der spezifische Honabtrag, das heißt das Verhältnis aus gemessenem Abtrag beim Fertighonen und dafür benötigter Zeit, war bei allen verwendeten Spritzschichten hoch genug, um innerhalb der vorgegebenen Taktzeiten bei der Fertigung eines Zylinderkurbelgehäuses die Honbearbeitung zu gewährleisten.

## Patentansprüche

1. Verfahren zum Herstellen einer im Betrieb eine hydrodynamische Schmierung gewährleistenden Gleitfläche (2) auf einem metallischen Werkstück, **gekennzeichnet durch** die Schritte
a. Aufbringen einer Verschleißschicht (3) auf den betreffenden Flächen des aus einer Aluminiumlegierung gefertigten Werkstückes durch thermisches Spritzen,
b. wobei die Verschleißschicht (3) mit herausbrechbarem Material ausgebildet wird,
c. teilweises Abtragen der Verschleißschicht (3) durch mechanische Bearbeitung zum Bilden der die hydrodynamische Schmierung gewährleistenden Gleitfläche (2) durch
d. Erzeugen von Materialausbrüchen durch die mechanische Bearbeitung,
e. wobei die freigelegten Materialausbrüche vereinzelte Schmiertaschen (7) bilden, die in ihrer Gesamtheit ein Mikrodruckkammersystem bilden.

2. Verfahren nach Anspruch 1, **dadurch gekennzeichnet, dass** die Verschleißschicht (3) mittels Plasmaspritzen aufgebracht wird.

3. Verfahren nach Anspruch 2, **dadurch gekennzeichnet, dass** die mechanische Bearbeitung durch Honen erfolgt.

4. Verfahren nach Anspruch 2 **dadurch gekennzeichnet, dass** die Verschleißschicht (3) aus einem Spritzpulver mit 20 - 60 % Molybdänpulveranteil und 80 - 40 % Stahlpulveranteil besteht.

5. Verfahren nach Anspruch 4, **dadurch gekennzeichnet, dass** das Spritzpulver vorzugsweise aus 30 - 50 % Molybdänpulveranteil und 70 - 50 % Stahlpulveranteil besteht, insbesondere aus 50 % Molybdänpulveranteil und 50 % Stahlpulveranteil.

6. Verfahren nach Anspruch 5, **dadurch gekennzeichnet, dass** das Stahlpulver vorzugsweise ein legierter Werkzeugstahl ist.

7. Hubkolbenmaschine, insbesondere Verbrennungskraftmaschine, mit einem Zylinderlaufbahnen aufweisenden Kurbelgehäuse, wobei die diese Zylinderlaufahnen tragenden Laufbuchsen einstückig und materialeinheitlich mit dem Kurbelgehäuse aus einer Aluminiumlegierung gefertigt sind, auf welchen eine mittels Plasmaspritzen aufgebrachte Verschleißschicht angeordnet ist, wobei durch Honen der Verschleißschicht mit entsprechenden Materialausbrüchen Schmiertaschen freigelegt sind, welche in ihrer Gesamtheit ein Mikrodruckkammersystem ausbilden.

## Claims

1. Process for producing a slide surface (2), on a metal workpiece, ensuring hydrodynamic lubrication during operation, **characterised by** the steps of
(a) using thermal spraying to apply a wear layer (3) on the relevant surfaces of the workpiece produced from an aluminium alloy,
(b) wherein the wear layer (3) is formed with material which can be broken open,
(c) partially removing the wear layer (3) by mechanical working to form the slide surface (2) ensuring hydrodynamic lubrication, by
(d) producing cavities in the material by the mechanical working,
(e) wherein the exposed cavities in the material form individual lubrication pockets (7) which together form a micro pressure chamber system.

2. Process according to Claim 1, **characterised in that** the wear layer (3) is applied by plasma spraying.

3. Process according to Claim 2, **characterised in that** the mechanical working is carried out by honing.

4. Process according to Claim 2, **characterised in that** the wear layer (3) consists of a spray powder with a 20 - 60% proportion of molybdenum powder and an 80 - 40% proportion of steel powder.

5. Process according to Claim 4, **characterised in that** the spray powder preferably consists of a 30 - 50% proportion of molybdenum powder and a 70 - 50% proportion of steel powder, in particular a 50% proportion of molybdenum powder and a 50% proportion of steel powder.

6. Process according to Claim 5, **characterised in that** the steel powder is preferably an alloyed tool steel.

7. Reciprocating engine, in particular an internal combustion engine, having a crankcase comprising cylinder tracks, wherein the bushings carrying these cylinder tracks are produced integrally and materially uniform with the crankcase from an aluminium alloy on which a wear layer applied by means of plasma spraying is disposed, wherein by honing the wear layer with suitable material cavities, lubrication pockets are exposed which together form a micro pressure chamber system.

## Revendications

1. Procédé de fabrication d'une surface de glissement (2) sur une pièce métallique, laquelle surface assure en fonctionnement une lubrification hydrodynamique, ce procédé étant **caractérisé par** les étapes de :
(a) dépôt, par projection à chaud, d'une couche de résistance à l'usure (3) sur les surfaces concernées de la pièce fabriquée à partir d'un alliage d'aluminium,
(b) la couche de résistance à l'usure (3) étant réalisée avec un matériau propre à être arraché,
(c) enlèvement partiel de la couche de résistance à l'usure (3) par un traitement mécanique, afin de former la surface de glissement (2) assurant la lubrification hydrodynamique, par
(d) obtention de ruptures dans le matériau du fait du traitement mécanique,
(e) les ruptures mises à découvert dans le matériau constituant des poches individuelles de lubrification (7), qui forment ensemble un système de microchambres de pression.

2. Procédé selon la revendication 1, **caractérisé en ce que** la couche de résistance à l'usure (3) est déposée à l'aide d'une projection au plasma.

3. Procédé selon la revendication 2, **caractérisé en ce que** le traitement mécanique est effectué par pierrage.

4. Procédé selon la revendication 2, **caractérisé en ce que** la couche de résistance à l'usure (3) consiste en une poudre projetée ayant une teneur en poudre de molybdène comprise entre 20 et 60 %, et une teneur en poudre d'acier comprise entre 80 et 40 %.

5. Procédé selon la revendication 4, **caractérisé en ce que** la poudre projetée consiste, de préférence, en 30 à 50 % de poudre de molybdène et en 70 à 50 % de poudre d'acier, et notamment en 50 % de poudre de molybdène et en 50 % de poudre d'acier.

6. Procédé selon la revendication 5, **caractérisé en ce que** la poudre d'acier est, de préférence, un acier allié à outils.

7. Machine à piston alternatif, notamment moteur à combustion interne, comportant un carter présentant des chemins cylindriques de glissement, les chemises portant ces chemins cylindriques de glissement étant fabriquées en une pièce et en le même matériau avec le carter en un alliage d'aluminium, sur lequel est déposée, par projection au plasma, une couche de résistance à l'usure tandis que, ensuite, par un pierrage de la couche de résistance à l'usure, des poches de lubrification sont mises à découvert du fait de ruptures correspondantes dans le matériau, ces ruptures constituant ensemble un système de microchambres de pression.
